# EUROPEAN PATENT SPECIFICATION

(11) **EP 2 585 242 B1**
(45) Date of publication and mention of the grant of the patent: **25.02.2015**
(21) Application number: 11739201.9
(22) Date of filing: 23.06.2011
(51) Int. Cl.: B23D 57/00

(54) **ROLLER FOR SUPPORTING AND/OR GUIDING OF DIAMOND WIRES IN MULTI-WIRE MACHINES FOR CUTTING BLOCKS OF ARTIFICIAL OR NATURAL STONE**
ROLLE ZUM TRAGEN ODER FÜHREN VON DIAMANTDRÄHTEN IN EINER MEHRDRAHTMASCHINE ZUR SCHNEIDUNG VON BLÖCKEN AUS KÜNSTLICHEM ODER NATÜRLICHEM STEIN
ROULEAU POUR LE SUPPORT ET/OU LE GUIDAGE DE FILS DIAMANTES DANS UNE MACHINE MULTIFILS POUR LA COUPE DE BLOCS EN PIERRE ARTIFICELLE OU NATURELLE

(30) Priority: 25.06.2010 IT MO20100191
(43) Date of publication of application: 01.05.2013
(73) Proprietor: Pedrini SpA ad Unico Socio, 24060 Carobbio degli Angeli (BG) (IT)
(72) Inventor: Pedrini, Luigi, 24060 Carobbio Degli Angeli (Bergamo) (IT)
(74) Representative: Gasparini, Alberto
(86) International application number: PCT/IT2011/000217
(87) International publication number: WO 2011/161713

(56) References cited:
- EP-A1- 1 024 314
- EP-A1- 1 598 162
- EP-A1- 2 123 384
- WO-A1-2009/040870
- JP-A- 11 123 649
- US-A- 901 175
- US-A- 2 951 474

## Description

### Field of application

The present invention refers to a roller or drum for supporting and/or guiding diamond wires in multi-wire machines for cutting blocks of artificial or natural stone, according to the preamble of claim 1.

### Prior art

Such a roller or drum is known from EP 2 123 384 A1.

The rollers or drums for support/guide, for the rings of the diamond wires, are furnished with coverings made of soft material in order to limit the effect of wearing which takes place in the grooves for the wires. The grooves are also protected from increased abrasion by the diamond inserts of the wire.

Existing technology for multi-wire machines that uses rings of diamond wire on rollers or drums includes grooves made of soft material to house a single diamond wire. This is necessary to limit wearing between the diamond wire and the groove. Wearing occurs due to the small difference in speed between the single closed-ring diamond wires, and the inevitable difference of length between the single rings. This wearing is due to the wire sliding in its respective groove in relation to the wires in the other grooves. The roller or drum wears like this only in some of the grooves i.e. those with wires with a different speed in relation to the peripheral speed of the roller or drum. The roller or drum must have a single rotation speed, as it is a single body. Therefore, the wearing of the groove is an average of possible outcomes of wearing and is distributed according to the small difference of speed between the wires, because of the way the rings of diamond wire cut.

The diamond wire consists of a steal cable with multiple strands on which diamond inserts with a greater diameter are fixed at set distances. The section of wire is not constantly covered in the groove, there is irregular contact between the wire and the groove, because the inserts and the part of wire between them cannot be simultaneously in contact with the surface of the groove. To compensate for the sliding between the wires, grooves on pulleys have been adopted. Only one wire at a time slides in it, while in the rollers or drums, adjacent grooves with a soft material covering wear if the wires which press on them have different ring progress so that there is a difference in tangential speed in the grooves of the roller. As said, the wires of adjacent rings are positioned to cut areas of a natural stone block which can have different hardnesses. Stress on the wire in tension occurs in zones connected to difficulties during cutting. Therefore adjacent wires become lengthened because of this tension and this creates small differences in speed which only become significant when wires are far from each other.

Rollers or drums are generally made of a cylindrical surface covered in soft material, which is vulcanized to obtain the correct hardness and it is rigidly connected to the roller or drum. After use, the soft material for the grooves, is gradually consumed, despite being hardened, so as to obstruct the correct support and/or guide of the wires that press on it. Therefore it needs to be replaced and so after the covering is removed for mechanical processing and it is replaced, a new covering needs to be vulcanized.

A possible solution to this is an assembly of rings made of the soft material for covering, which constitute the said grooves, on a cylindrical surface of the roller or drum that is internal to the grooves. The rings can slide on the said cylindrical surface in relation to each other and compensate for the difference in speed of the diamond wires with their inserts. However, it has been proven that this sliding on the cylindrical surface does not occur and the roller or drum behaves like a single mass with a covering on the cylindrical surface and the wires which have different speeds cause abrasion when they slide in the grooves.

Maintenance must be carried out even if few of the grooves of the roller or drum are worn, as this causes further sliding between the diamond wires with different instant length and therefore speed. Furthermore, vulcanizing another covering with grooves is not easy to carry out as it must be done on the complete roller or drum. This must be carried out in a workshop due to the precision of the mechanical processing and/or vulcanizing that is necessary. Therefore, when the machine is not in a workshop, substitution and repair of the soft material covering is very expensive due to the cost of transport of the roller or drum.

In the existing technology specific to drums with multiple wires for cutting stone, document TO2006A000257 is well-known. The document describes a roller for multi-wire machines for cutting blocks of stone with diamond wires. On the surface of the roller, there are coaxial rings made of polyurethane, which are fitted on the said drum and sealed in packs, forming an external surface with grooves for support and guide for the diamond wires. Each ring can be individually replaced after dismantling the previous rings and the end of the drum. Each ring has more grooves on the external surface and is sealed on the cylindrical surface of the drum for interference. Therefore, vulcanization does not need to be carried out when substituting one of the rings which has grooves that have been damaged.

However, despite being less costly, this method is even less practical than the complete vulcanization of the soft material covering, because the rings that are external and adjacent to those damaged must be removed in order to replace the damaged ones.

In the existing technology, document VI2007A000184 is also well-known. In this document, annular anti-wear elements are anchored on pulley discs by means of the interposition of an annular appendix internal to the annular anti-wear element which works in a corresponding groove in the outer cylindrical surface of the pulley disc. The annular anti-wear element is radially fixed in place because of the form of the annular groove which is the seat of the inner annular appendix. It is fixed in place with specific forms of construction or even with sealing with axial screws in the disc to block the said annular appendix in the groove and therefore "clasp" the annular anti-wear element of which the inner annular appendix is an integral part.

This form of construction can only be applied to pulleys, because it is impossible to construct a roller or drum with grooves deep enough to house these inner annular appendices, if the annular anti-wear elements must be assembled adjacently as happens for the housing grooves for diamond wires which are well-known in the field. As a solution, the above document proposes the use of several pulleys positioned at a distance next to each other necessary to obtain spatial continuity between the housing grooves at the outer diameter, creating a roller which is subdivided into single pulleys for each diamond wire. If necessary, the axis of rotation of each single pulley can be shifted to create tension in the wire concerned.

However, these methods are not practical in terms of maintenance and costs, especially considering what is stated in the document mentioned, where there are the same number of pulleys side by side as adjacent diamond wires, which in modern multi-wire machines are many. Furthermore with the above methods, the diamond wires are no longer versatile, because space between the pulleys positioned side by side means that the distance between the diamond wires cannot be changed to achieve the desired thickness of stone slab.

The existing technology can be improved to create a roller or drum for support/guide with closed-ring inserts for machines for cutting blocks of artificial or natural stone, which overcomes the above difficulties.

The technical problem which forms the basis of the following invention is that of creating a roller or drum for support/guide of wires which can compensate in an economical way for the different sliding speeds between the wires, in the organ for support and/or guide of the wires, and which at the same time is easy to assembly, easy to replace during maintenance and with limited production and maintenance costs.

A further problem is that of arranging the cutting diamond wires in multi-wire machine at the required intervals, in order to obtain the desired thickness of slab and at the same time containing the costs of the roller or drum with the grooves for contact with the diamond wires, that are freely to be putted at the intervals defining desired thickness of plates, and the organs mentioned above.

### Summary of the invention

The present invention resolves this technical problem with a roller or drum according to claim 1.

In a further and more advantageous form of construction, the supporting axis or pivot is subdivided into parts of supporting axis or pivot of a width corresponding to the width of the parts of roller of the said sections; the rotating support organs on the corresponding part of supporting axis or pivot allow the section of roller or drum to be separate or joined to the adjacent sections by means of the connection/assembly parts of supporting axis or pivot drawn together.

In a further and optimized form of construction, the parts of axis or pivot of adjacent sections are equipped with reciprocal centering organs and rigid connections between them in order to align the respective external cylindrical surfaces of the relevant corresponding parts of roller or drum, in order to create an aligned external cylindrical surface of housing grooves for diamond wires.

Moreover, in a specific form of construction, the distance between grooves of two ends of adjacent sections in two parts of roller or drum side by side, for the housing of adjacent diamond wires, is equal to the distance necessary for cutting a slab of stone of the minimum thickness intended for the multi-wire machine. Furthermore, the distance between the two adjacent grooves, both not at the ends of the part of roller or drum of a section, is equal to 1/3 the distance between the end grooves of two parts of roller or drum belonging to adjacent sections.

Moreover, in a further and specific form of construction, the width and the number of housing grooves for the diamond wires is the same in all sections of roller or drum in which it is subdivided.

Furthermore, in a specific and preferred form of construction, the parts of supporting pivot or axis of the sections of roller or drum are tubular and moreover, within the tubular part of the pivot there are through holes for housing the screws which rigidly connect the part of the pivot to a part of pivot or with the bracket behind it; there are, in addition, threaded blind holes which are staggered compared to the through holes.

Finally, a roller or drum for support/guide of diamond wires in multi-wire machines for cutting blocks of artificial or natural stone has organs for support and rotation comprising a pair of rolling bearing for each part of roller or drum that rotates on its respective part of pivot or tube of support. These are housed in seats next to the ends of their respective part of pivot or tube of support.

Further characteristics and advantages of the present invention, a roller or drum for support/guide of diamond wires in multi-wire machines for cutting blocks of artificial or natural stone, are in the description that follows which includes examples of the invention which are indicative and not limited with reference to the nine drawing tables attached.

### Brief description of the drawings

Figure 1 represents a schematic perspective view of a roller or drum in a multi-wire machine for cutting blocks of artificial or natural stone according to the invention. It is a so-called wire-guiding roller connected to a support structure.
- Figure 2 represents a schematic axial view of the wire-guiding roller of the previous figure without annular cover at the end.
- Figure 3 represents a schematic perspective view of the roller or drum which is dismantled and shown with two sections of roller side by side and rotated.
- Figure 4 represents a schematic diametral section of a complete wire-guiding roller composing three sections of roller, each rotating independently on its own part of tubular pivot.
- Figure 5 represents a limited schematic diametral section of a single part of section of roller or drum assembled, to illustrate the rotating organs of support and holding between the part of tubular pivot and the hub of the corresponding part of roller.
- Figure 6 represents a diametral schematic section of a complete wire-guiding roller composing six sections of roller each rotating independently on its own part of tubular pivot according to the further form of construction. Each section is supported, alongside the previous one and the successive one, on a coaxial pivot which is in the Figure and is supported at both ends.
- Figure 7 represents an enlarged diametral schematic section of a little more than two sections of roller from Figure 6 complete with support structure at one end.
- Figures 8 and 9 represent a schematic perspective view of a dismantled wire-guiding roller, shown here with only one or two sections of roller and tubular pivot, which can be assembled and dismantled during construction and maintenance of the said wire-guiding roller.
- Figure 10 represents and enlarged diametral schematic view of more than two sections of roller, as in Figure 6, in which the sections of roller or drum can be dismantled in relation to the respective section hub.
- Figures 11 and 12 represent a schematic perspective view of a section of roller or drum dismantled from its respective hub. The hub shown in Figure 12 is without coaxial pivot and tube as well as the rotating rolling support bearings for the hub.
- Finally, Figure 13 represents a schematic axial view of the outer flange ears of the section hub and the corresponding inner flange ears of the body of the section of roller or drum, in reciprocal position and dismantled.

### Detailed description of a preferred form of construction

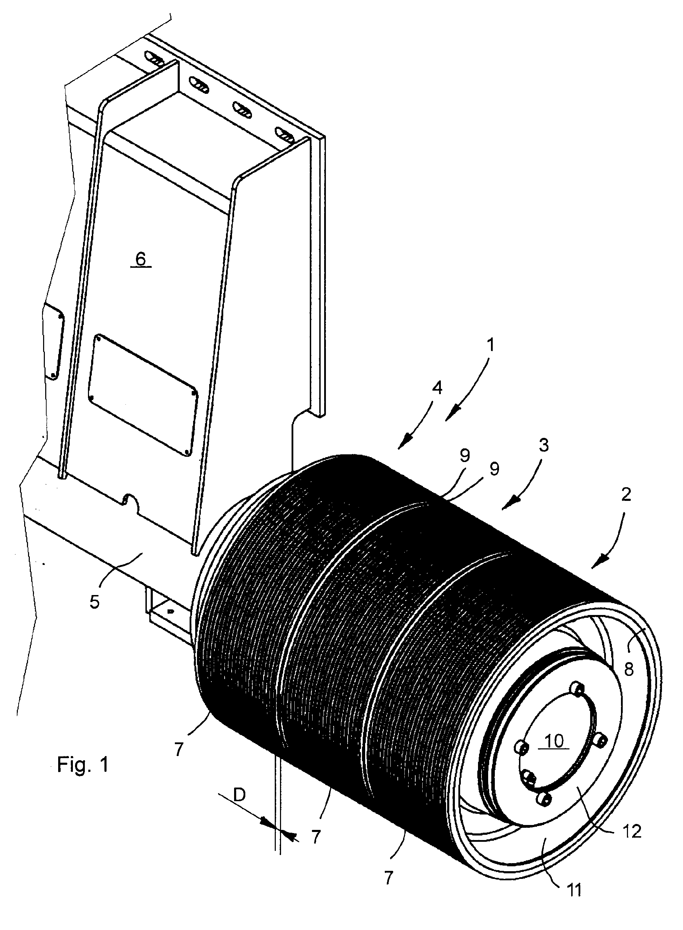

Figure 1 shows a wire-guiding roller 1, according to the invention, in three sections: an outer section 2, an intermediary section 3 and an inner section 4. The pivot for the said sections of roller is tightly connected to a bracket 5 and a support structure 6 for the wire-guiding roller, well-known in the field, which is connected to the part of the machine that determines the position of the diamond wires when cutting blocks of natural stone. These are not shown in the Figure. On the outer cylindrical surface of each section of roller there is a series of grooves 7 side by side made on soft material covering 8. These house the diamond wires. There is a minimum distance D between the end grooves 9 of two sections side by side, which enables two diamond wires to function side by side in order to achieve the minimum thickness of stone slab already decided during construction of the machine. Each section of roller 2, 3 and 4 has a tubular central part of pivot, connected between them with a bracket 5. The bodies 11 rotate on this tubular central part of pivot for each of the parts of the sections of roller. An annular cover 12 protects the assembly and rolling organs of the said bodies on the tubular central pivot 10.

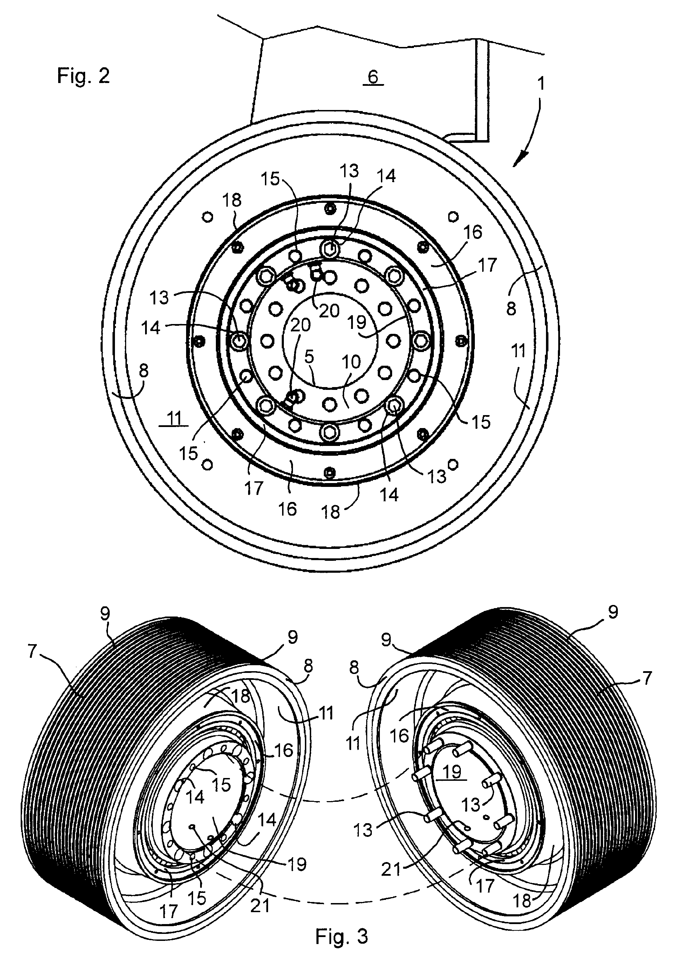

Figure 2 shows the screws 13 which rigidly connect the different parts of tubular central pivot 10 to each other, and the first part belonging to the inner section, which is connected to the bracket 5. On the tubular pivot of each section there are through holes 14 to house the said screws 13 and threaded blind holes 15 to hold the fastening screws of the part of tubular pivot for the preceding and more outer section of roller. Finally, inner 16 and outer 17 shaped rings are positioned between the hub 18 of the rotating body 11 of each section of roller and the part of tubular central pivot 10. The clasps are not shown. In the internal surface of the part of tubular pivot, there are attachments 20 for the tubing that creates lubrication and pressure between the bearings and the said clasps by means of the holes 21 in Figure 3.

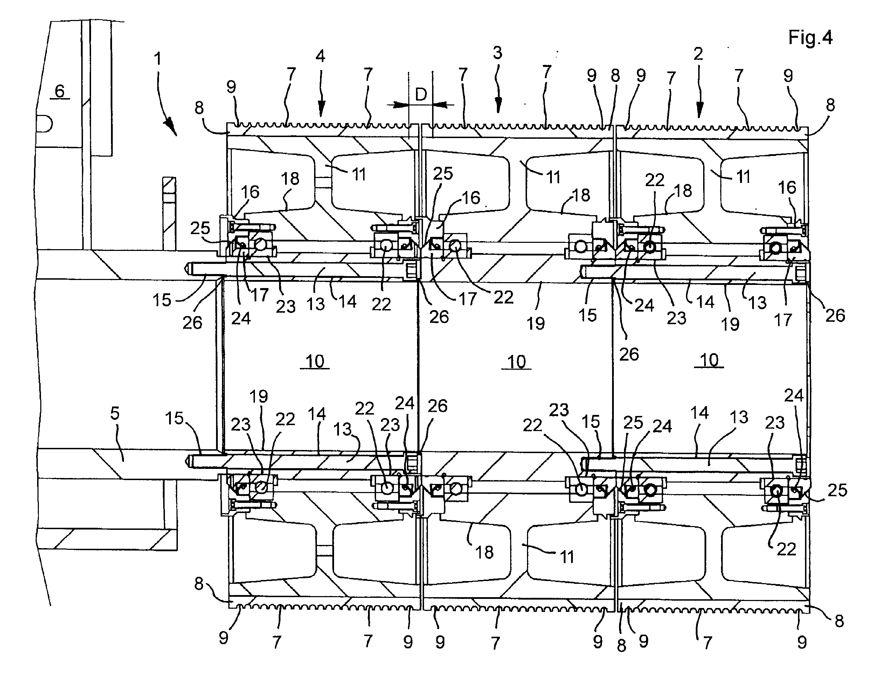

Figure 4 shows each part of tubular pivot 10 supporting its respective part of roller in rotation. There is an outer 2, an intermediary 3 and an inner 4 section of the wire-guiding roller 1. The contact during rotation occurs by means of rolling friction bearings 22 housed in their respective seats 23 with rotating lip clasps 24. The shaped outer ring 16 is moved close to the inner one 17 by means of a conical surface 25 which helps to contain the rolling bearing 22 in its seat 23 and therefore position axially the part of roller on the part of tubular pivot 10 of the section concerned. The mechanical coupling between the parts of tubular pivot occurs on a centering device 26 close to inner diameter of the tubular pivot 10.

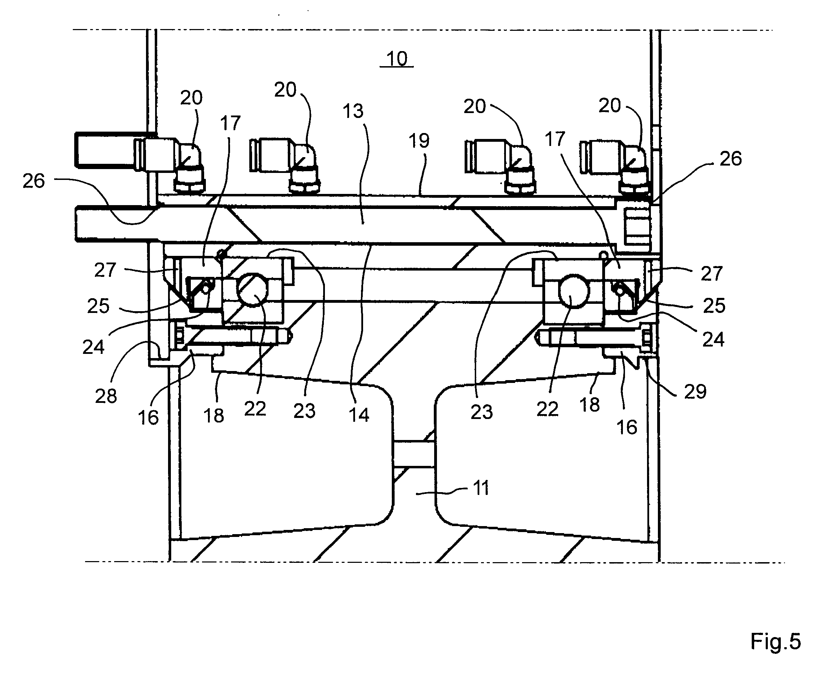

Figure 5 shows the coupling between the shaped outer 16 and inner 17 rings by means of the conical surface 25 so that the ring contains the lubricant coming from the holes 27 and pushes it towards the connecting clasp 24 in the seat 23 of the rolling bearing 22. The conical surfaces 25 are lubricated when lubricating grease is carried through the holes 27 in the inner shaped ring 17 supplied by the said attachments 20 and the holes 21 in the tubular pivot 10. Besides acting as a lubricant, grease also stops water from re-entering which is mixed with the dust and diamond removed during cutting. The outer shaped ring 16 on a side of the part of section of roller, has a female seat 28 and the outer shaped ring 16 on the opposite side of the part of section of roller, has a male seat 29. These two form a coupling when two consecutive sections of wire-guiding roller 1 come together in order to protect the rolling organs even when the assembly of the sections is modular.

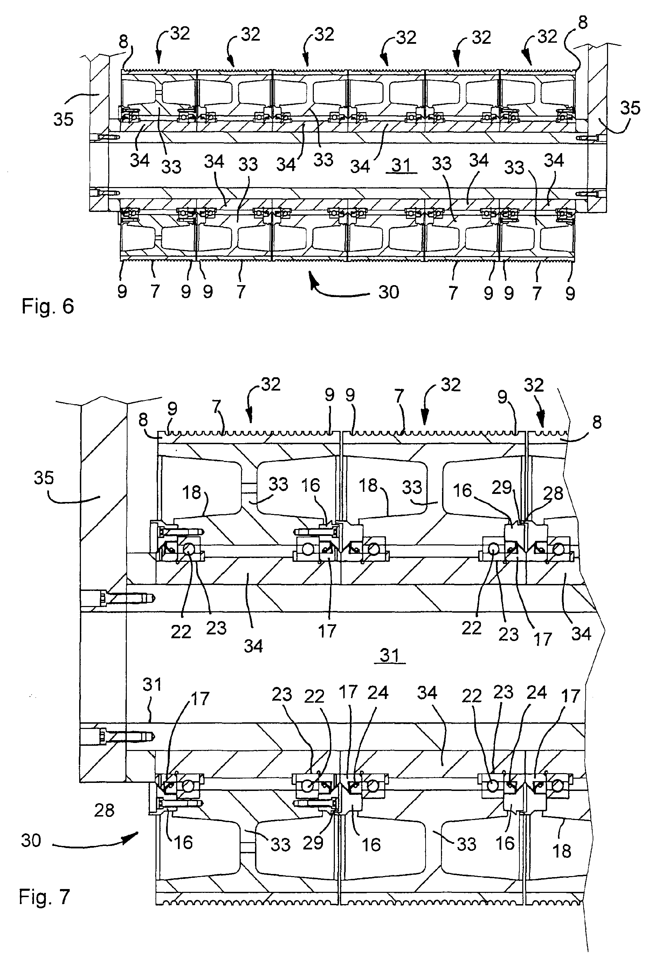

Figures 6 and 7 show a form of construction of a roller 30 or drum for support and guide of a large number of diamond wires with a single central axis 31. Each section of roller 32 has the same characteristics with the intermediary 7 and end 9 grooves on the outer cylindrical surface of the part of roller where the soft material covering 8 is fixed. Every body 33 of its respective part of roller is connected in rotation with a central tube 34 by means of the same organs for support, rotation and protection described for the preceding form of construction in Figure 4. The single central axis 31 is connected its ends with the structure 35 for support for the multi-wire cutting machine: each axis is coupled and removable, when needed, from the single central axis 31 in order to create the reciprocal connection between the different parts of tube 34 of the sections 32 of roller 30. The tube 34 of each part maintains the coupling of the organs for support and rotation and the hub 36 of its own part even during detachment of the sections 32 from the roller 30.

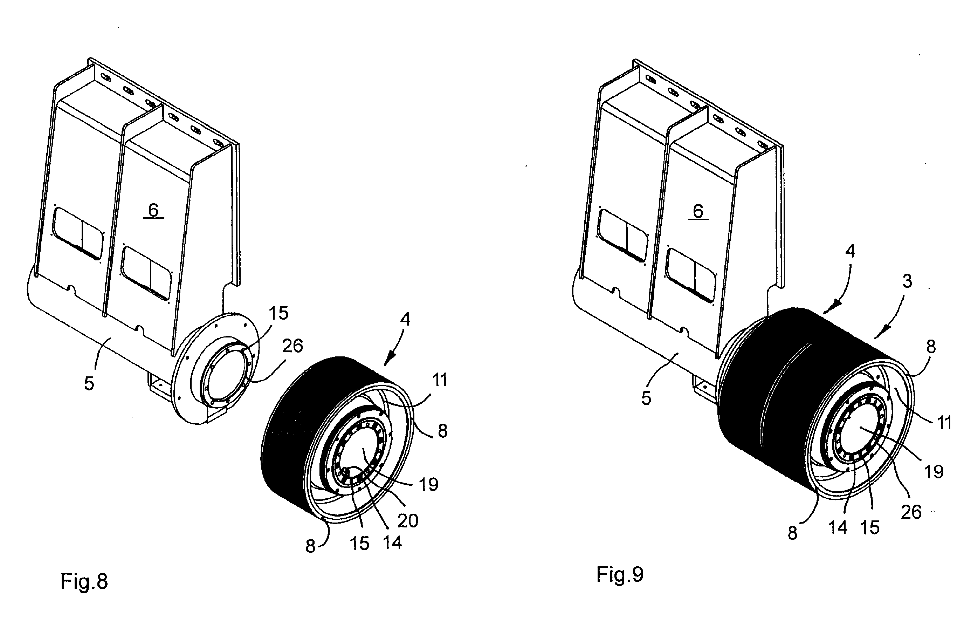

Figures 8 and 9 clearly show the composition of the parts of tubular pivot 11, and analogously the tube 34, for support and rotation of the parts of roller of a section of wire-guiding roller 2, 3, 4 or 32. The tubular pivot can connect to more than two parts but not less than two parts or sections or wire-guiding roller 1, 30. The Figure shows the parts of roller that form a section 2, 3, 4 or 32 or a wire-guiding roller 1 as having identical dimensions. As shown they can guide up to 8 wires each at the minimum cutting thickness decided during planning of the multi-wire machine. These sections of roller can be made less wide to guide less than 8 wires, or wider to guide more than 8 wires. The said parts of wire-guiding roller, the sections composing the parts of tubular pivot 10 or tube 34 and the corresponding parts of roller, can also be made in different sizes to house less or more than 8 wires. The sections are arranged during assembly in a different way to that decided before in order to achieve a modularity linked only to the connection dimensions between the centering diameters of the parts of tubular pivot 10 at the outer diameter of the grooves for guiding the diamond wires and the diameter of the said wire. Therefore the designer of the machine or maintenance can put together a wire-guiding roller or drum for support in the most beneficial way according to their needs with the determined sections of roller/drum for the diamond wires and using the complete available sections of roller or drum.

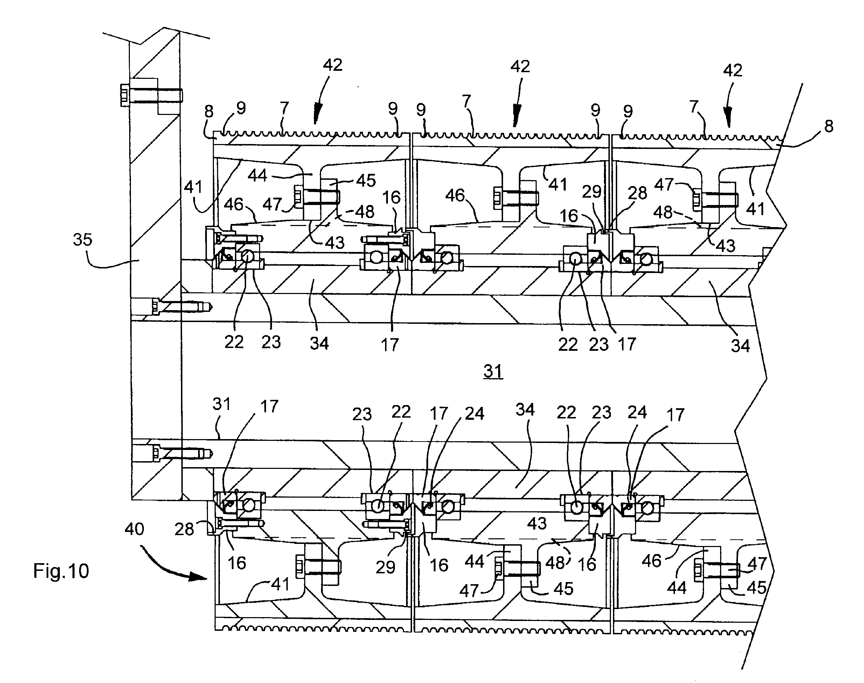

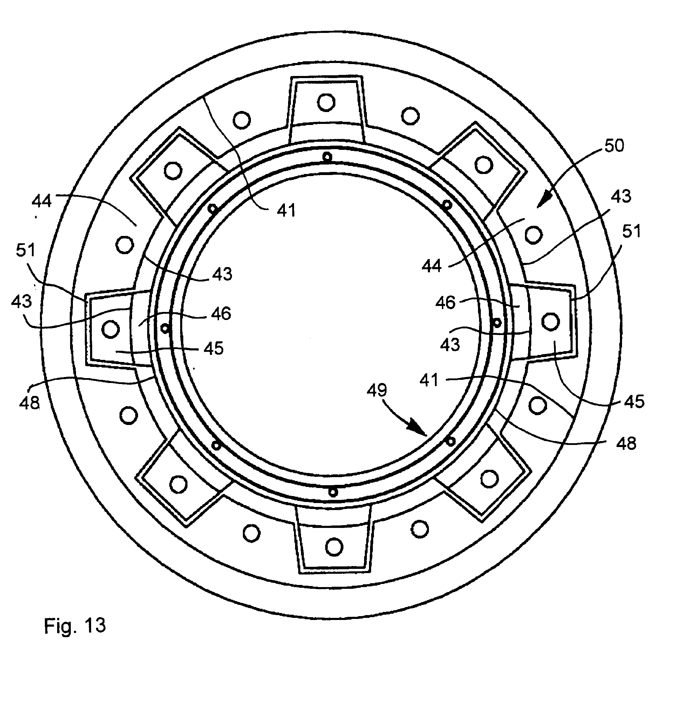

Figures 10 to 13 show a further form of construction of a roller 40 or composite drum for support and guide of a large number of diamond wires with a single central axis 31. Each section of roller 42 has the same characteristics with the intermediary 7 and end 9 grooves on the outer cylindrical surface of the part of roller where the soft material covering 8 is fixed. Each rotating modular body 41 that can be dismantled of its respective part/section or roller or drum 42 is connected to a respective hub 46 with a centering device 43 that can be dismantled. The hub is connected in rotation with a central tube 34 by means of the same organs for support, rotation and protection described for the preceding forms of construction. Similarly, the single central axis 31 is connected at the ends with a support structure 35 for the multi-wire cutting machine. Each tube 34 is coupled and removable, when needed, from the single central axis 31 in order to create the reciprocal connection between the different parts of tube 34 of the sections 42 of composite roller 40. The tube of each part maintains the coupling of the organs for support and rotation and the hub 36 of its own part even during detachment of the sections 42 from the composite roller 40, if the respective tubes 34 are removed from the single central axis 31. The single section of roller or drum 42 shown is connected to its own hub 46 by means of a detachable coupling with screws 47 on the centering device 43. It seals between them ears 45 of an outer radial flange 49 of the hub 46 and ears 44 of an inner radial flange 50 of the rotating modular body 41. Figure 10 shows an axial groove 48 on the hub 46 to allow the passage of the centering device 43 with the ears 44 of the inner radial flange 50 during dismantling and/or assembly.

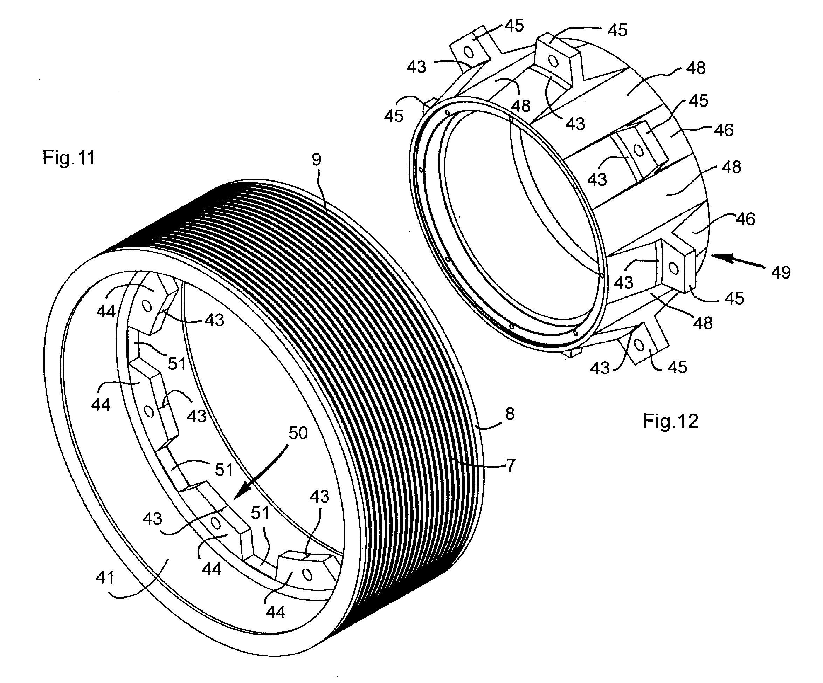

Furthermore, figure 11 shows the openings 51 of the radial inner flange 50 for the passage of the ears 45 of the radial outer flange 49 during dismantling and/or assembly.

During assembly of a modular roller, as described above, for the connection of the pivot in the first form of construction, which can be dismantled into parts of pivot which are centered and sealed one on the other with the first on the support bracket for the roller or drum, the designer is free to decide the appropriate number of wires for each part of section of roller or drum according to the specific function that the multi-wire block-cutting has to carry out. Similarly, the technician that needs to replace the grooves made of soft material covering can combine more modular sections of roller or drum if available, in order to fix the roller or drum as is required and as convenient at the time of fixing due to this modularity. Modularity also means that the sections of roller or drum and correspondingly pivot 10 or tube 34 can be combined and can substitute each other, in order to obtain the appropriate length to support and guide a set number of rings of diamond wires required for the multi-wire cutting machine.

Furthermore, the invention can rapidly substitute a section 2, 3, 4, 32 or 42 of wire-guiding roller 1, 30 or 40 after wearing that occurs in only one section. The Figures show a first form of construction in which the pivot for rotating the wire-guiding roller 1 is detached from the bracket 5, as is common practice. The Figures show a second form of construction in which the single central axis 31 is supported by both ends, but can be supported by only one as in Figure 4. When more wires need to be supported, the pivot can be constructed for connection to a supporting structure at both ends as in the form of construction with a single central axis 31. At the free end instead of an annular cover 12 a further end support can be inserted in to the centering diameter 26 and sealed in the blind holes 15, in order to support the tubular pivot 10 at both ends and therefore support and/or guide a large number of diamond wires (up to 56 or 64 at the same time).

The Figures show a wire-guiding roller 1 in which each section houses up to 8 wires side by side which cuts blocks of stone to a minimum thickness set for the machine. When blocks of a thickness greater than distance D need to be cut, the number of wires must be reduced. Therefore the wires will occupy grooves 7 at a distance greater than D/3 or twice this distance according to the desired thickness of the single block or stone being cut.

The form of construction shown in Figures 10 to 13 can be used in a similar way to the previous form, in that it can be dismantled with the removal of each tube 34, its respective hub 46 and the section or part of roller 42 connected to it, which can be dismantled although this is not shown here. However this form of construction was devised to further facilitate the dismantling and reassembly of the sections or parts of roller or drum 42 without dismantling the tubes 34 and their respective hubs 46. In fact, in order to extract the modular bodies 41 of the roller or drum 42, it is sufficient to take away the screws 47 connected to the body or hub concerned. With a simple and minimal rotation between the modular body 41 and the hub 46, the ears 45 of the radial flange 49 external to the hub can freely pass within the openings 51 of the inner radial flange 50 and at the same time the ears 44 of the radial inner flange 51 of the modular body 41 can freely pass within the axial grooves 48 of the hub 46 and in the outer radial flange 49. Therefore dismantling, reassembling and performing maintenance on the composite roller or drum 40 is quicker and easier, even in workshops with limited facilities. The dismantling of the hub 46 and its relative rotating modular body 41 of part/section 42 occurs by dismantling the flange coupling equipped with ears 44, 45 connected to openings 51 and grooves 48 in the opposite flange.

Due to the reduction of mechanical work of dismantling and reassembling of the sections or parts of roller or drum in this form of construction, the successive regeneration of the soft material covering is more convenient. This is an effect that other forms of construction mentioned above tried to achieve.

The advantages of the invention are the following: the modular construction of the roller or drum for guide and/or support of the rings of diamond wire in multi-wire machines for cutting stone blocks which enables a suitable number of sections roller to be assembled together without having to reassemble them in the same order after eventual dismantling. Therefore the sections are interchangeable. Similarly when modular sections of roller and drum are required and this modularity involves having a different width of section of roller or drum to house a different number of diamond wires, this modularity enables the order of sections to be free for a few or many wires and every single section to support and/or guide.

The only limit to this modularity that the designer/maintenance may encounter is the need to combine the modules to reach the number of diamond wires to support/guide for the specific application required. The difficulties encountered previously will no longer be insurmountable and will not involve high costs when a wire-guiding roller or drum to support diamond wires as described above is used. In fact, after a high level of wearing has taken place in a section of roller, it can be dismantled by removing from the machine the complete section of roller and the part of tubular pivot 10 or tube 34, or even the modular body 41, which can be substituted with a similar section allowing the machine to resume cutting and the roller with the soft material covering 8 and the worn grooves 7 and 9 to be sent to the nearest and/or most economical workshop so that the covering and grooves can be replaced. The cost of spare parts for maintenance will certainly be less for a complete section of roller or drum for the relative pivot or axis than a single roller or drum. Transporting a single section of roller or drum which is or is not complete with its relative part of pivot/axis is much less costly than transporting a single roller or drum, even if the distance to be covered is long.

Furthermore, the arrangement of a limited number of wires in the grooves 7 or 9 of the covering 8 of a part of roller of a single section 2, 3, 4, 32 or 42 enables the wear that occurs during contact between the wires and the grooves to be significantly reduced, because the reciprocal sliding is less and the parts of roller of different sections of roller can rotate at different speeds from each other in order to mediate their speed based on how the wires impact on that section. Limited sliding between adjacent wires also highlights how advantageous it is to reduce the number of wires that press on a single section with the clear limitation that the more the sections the roller or drum has the greater the cost of construction due to the increased number of bearings, screws, rings and clasps needed and the greater the maintenance costs due to increased work dismantling and reassembling the sections. The form of construction in Figures 10 to 13 shows a specific limitation to the said costs of construction and/or maintenance as the dismantling and reassembly is only limited to each modular body 41 of part/section 42 concerned of roller 40.

Finally, despite being less economical as mentioned above, the modularity of the construction of the sections of roller or drum for support/guide of diamond wires includes the possibility of assembling adjacent sections of roller and corresponding pivot of different width in order to support/guide a number of wires that varies from section to section. It is more economical if the width of the sections is constant so that an equal or similar number of diamond wires can be supported/guided and so that less sections of roller or drum all at the same width can be stored for production and maintenance.

Although it is less beneficial, the tubular pivot 10 or parts of tubular pivot of each section can be substituted with a full pivot or a box pivot, which is a tube closed at the ends of the part and connected to each other. Furthermore the tight connection between the adjacent parts of pivot for supporting the parts of roller or drum can be made with threaded couplings having a large diameter, which is equal to the internal diameter of the pivot. Finally, although it is not economical, the parts of roller or drum can be supported in rotation directly on a single pivot or central axis at the hubs of the bodies 11, 33 or modular body 41 to avoid using the tube 34.

## Claims

1. A roller or drum for supporting and/or guiding diamond wires for multi-wire machines for cutting blocks of artificial or natural stone, comprising: rotating support organs of the roller or drum on a pivot or axis of support; a covering (8) made from soft material equipped with grooves (7, 9) for housing, supporting and guiding closed loop adjacent diamond wires; **characterized in that** the roller or drum is subdivided into at least two sections (2, 3, 4, 32 or 42) of roller or drum constituting at least two parts of roller or drum, to support and guide a number of adjacent diamond wires equal to or more than two per part of roller or drum; correspondingly, and **in that** each section has its respective part of roller or drum equipped with supporting and rotating organs for each part which are independent and rotatably connected to a supporting axis or pivot of the roller or drum.

2. A roller or drum, according to claim 1, in which the supporting axis or pivot is subdivided into parts of supporting axis or pivot of a width corresponding to the width of the parts of roller of the said sections (2, 3, 4 or 32); the rotating support organs on the corresponding part of supporting axis or pivot allow the section of roller or drum to be separate or joined to the adjacent sections by means of the connection/assembly parts of supporting axis or pivot drawn together.

3. A roller or drum, according to claim 2, in which the parts of axis or pivot of adjacent sections are equipped with reciprocal centering organs and rigid connections between them in order to align the respective external cylindrical surfaces of the relevant corresponding parts of roller or drum, in order to create an aligned external cylindrical surface of housing grooves (7, 9) for diamond wires.

4. A roller or drum, according to claim 1, in which the distance between grooves (9) of two ends of adjacent sections (2, 3, 4, or 32) in two parts of roller or drum side by side, for the housing of adjacent diamond wires, is equal to the distance (D) necessary for cutting a slab of stone of the minimum thickness intended for the multi-wire machine.

5. A roller or drum, according to claim 1, in which the width and the number of housing grooves (7, 9) for the diamond wires is the same in all sections (2, 3, 4,or 32) of roller or drum in which it is subdivided.

6. A roller or drum, according to claim 3, in which the parts of supporting pivot (10) or axis of the sections of roller or drum are tubular.

7. A roller or drum, according to claim 6, in which within the tubular part of the pivot (10) there are through holes (14) for housing the screws (13) which rigidly connect the part of the pivot to a part of pivot or with the bracket (5) behind it; there are, in addition, threaded blind holes (15) which are staggered compared to the through holes.

8. A roller or drum, according to claim 1, in which the distance between two adjacent grooves (7), both not at the end of the part of roller or drum of a section, is equal to 1/3 of the distance (D) between the grooves at the ends of two parts of roller or drum belonging to adjacent sections.

9. A roller or drum, according to claim 1, in which the supporting and rotating organs comprise a pair of rolling bearings (22), for each part of roller or drum rotatable on its corresponding part of pivot (10) or supporting tube (34). The rolling bearings are housed in spaces (23) next to the ends of their respective part of roller or drum or the pivot or tube.

10. A roller or drum, according to claim 9, in which the rolling bearings (22) are housed in a lubricated space with outside pressure and have assembly instruments in the space with a ring seal (24) towards the exterior of the space.

11. A roller or drum, according to claim 1, in which the parts of roller or drum between two adjacent sections are equipped with cylindrical spaces, for protection, male (29) and female (28), on opposite ends of each part, for reciprocal penetration following the coupling between sections that are side by side and connected with each other.

12. A roller or drum according to claim 1, in which each rotating modular body (41) of each part/section (42) of composite roller (40) can be dismantled in relation to its own hub (46).

13. A roller or drum, according to claim 12, in which the dismantling of the hub (46) and the relative rotating modular body (41) of part/section (42) occurs by means of the dismantling of a flange coupling equipped with ears (44, 45) connected through openings (51) and grooves (48) in the opposite flange.

## Patentansprüche

1. Walze oder Trommel zum Stützen und/oder Führen von Diamantdrähten für Mehrdrahtmaschinen zum Schneiden von Blöcken aus künstlichem oder natürlichem Stein, umfassend: rotierende Stützorgane der Walze oder Trommel auf einer Drehachse oder einer Stützachse; eine Beschichtung (8) aus weichem Material, versehen mit Nuten (7, 9) zur Aufnahme, zum Stützen und Führen benachbarter geschlossener Diamantdrahtschleifen; **dadurch gekennzeichnet, dass** die Walze oder Trommel in wenigstens zwei Abschnitte (2, 3, 4, 32 oder 42) der Walze oder Trommel unterteilt ist, welche wenigstens zwei Teile der Walze oder Trommel bilden, um eine Anzahl von benachbarten Diamantdrähten zu stützen und zu führen, und zwar zwei oder mehr pro Teil der Walze oder Trommel, und dass jeder Abschnitt seinen jeweiligen Teil der Walze oder Trommel mit Stütz- und Rotationsorganen für jeden Teil ausgerüstet hat, welche unabhängig voneinander sind und rotierbar mit einer Stützachse oder einer Drehachse der Walze oder Trommel verbunden sind.

2. Walze oder Trommel nach Anspruch 1, wobei die Stützachse oder Drehachse in Teile der Stützachse oder der Drehachse einer Breite unterteilt ist, die der Breite der Teile der Walze der Abschnitte (2, 3, 4 oder 32) entspricht, wobei die rotierenden Stützorgane an dem entsprechenden Teil der Stützachse oder der Drehachse es ermöglichen, dass der Abschnitt der Walze oder der Trommel getrennt oder verbunden wird mit den benachbarten Abschnitten mit Hilfe der zusammengezogenen Verbindungs-/Montageteile der Stütz- oder Drehachse.

3. Walze oder Trommel nach Anspruch 2, wobei die Teile der Achse oder der Drehachse von benachbarten Abschnitten mit wechselseitigen Zentrierorganen und starren Verbindungen zwischen ihnen ausgerüstet sind, um die jeweiligen äußeren zylindrischen Oberflächen der relevanten entsprechenden Teile der Walze oder der Trommel auszurichten, um eine ausgerichtete äußere zylindrische Oberfläche der Aufnahmenuten (7, 9) für Diamantdrähte zu schaffen.

4. Walze oder Trommel nach Anspruch 1, wobei der Abstand zwischen Nuten (9) von zwei Enden benachbarter Abschnitte (2, 3, 4 oder 32) in zwei nebeneinanderliegenden Teilen der Walze oder Trommel, für die Aufnahme von benachbarten Diamantdrähten, gleich dem Abstand (D) ist, der notwendig ist zum Schneiden einer Steinscheibe mit der minimalen für die Mehrdraht-Maschine vorgesehenen Dicke.

5. Walze oder Trommel nach Anspruch 1, wobei die Breite und die Anzahl der Aufnahmenuten (7, 9) für die Diamantdrähte in allen Abschnitten (2, 3, 4 oder 32) der Walze oder Trommel, in die sie unterteilt ist, die gleiche ist.

6. Walze oder Trommel nach Anspruch 3, wobei die Teile der stützenden Drehachse (10) oder der Achse der Abschnitte der Walze oder Trommel rohrförmig sind.

7. Walze oder Trommel nach Anspruch 6, wobei innerhalb des rohrförmigen Teils der Drehachse (10) Durchgangsbohrungen (14) zur Aufnahme der Schrauben (13) vorgesehen sind, die den Teil der Drehachse mit einem Teil der Drehachse oder mit der Klammer (5) dahinter starr verbinden, wobei zusätzlich mit einem Gewinde versehene Blindlöcher (15) vorgesehen sind, welche gegenüber den Durchgangsbohrungen versetzt sind.

8. Walze oder Trommel nach Anspruch 1, wobei der Abstand zwischen zwei benachbarten Nuten (7), beide nicht am Ende des Teils der Walze oder Trommel eines Abschnittes, gleich 1/3 des Abstandes (D) ist zwischen den Nuten an den Enden von zwei Teilen der Walze oder Trommel, welche zu benachbarten Abschnitten gehören.

9. Walze oder Trommel nach Anspruch 1, wobei die Stütz- und Rotationsorgane ein Paar Wälzlager (22) umfassen, für jeden Teil der Walze oder Trommel rotierbar auf seinem zugehörigen Teil der Drehachse (10) oder der Stützröhre (34), wobei die Wälzlager in Bereichen (23) nahe den Enden ihres jeweiligen Teils der Walze oder Trommel oder der Drehachse oder der Röhre aufgenommen sind.

10. Walze oder Trommel nach Anspruch 9, wobei die Wälzlager (22) in einem geschmierten Bereich mit Außendruck aufgenommen sind und Montagemittel in dem Bereich aufweisen, mit einer Ringdichtung (24) gegenüber dem Außenbereich des Bereichs.

11. Walze oder Trommel nach Anspruch 1, wobei die Teile der Walze oder Trommel zwischen zwei benachbarten Abschnitten zum Schutz mit zylindrischen Bereichen ausgerüstet sind, männlichen (29) und weiblichen (28), an entgegengesetzten Enden jedes Teils, zum gegenseitigen Eindringen folgend der Kopplung zwischen Abschnitten die nebeneinander liegen und miteinander verbunden sind.

12. Walze oder Trommel nach Anspruch 1, wobei jeder rotierende modulare Körper (41) jedes Teils/Abschnitts (42) einer zusammengesetzten Walze (40) bezüglich seiner eigenen Nabe (46) ausgebaut werden kann.

13. Walze oder Trommel nach Anspruch 12, wobei der Ausbau der Nabe (46) und des jeweiligen rotierenden modularen Körpers (41) des Teils/Abschnitts (42) mit Hilfe der Zerlegung einer Flanschkopplung erfolgt, die mit Laschen (44, 45) ausgerüstet ist, die durch Öffnungen (51) und Nuten (48) in dem gegenüberliegenden Flansch verbunden sind.

## Revendications

1. Rouleau ou tambour pour supporter et/ou guider des fils diamantés pour des machines multifils afin de découper des blocs de pierre artificielle ou naturelle, comprenant : des organes de support rotatifs du rouleau ou du tambour sur un pivot ou axe de support ; un revêtement (8) réalisé à partir d'un matériau souple équipé de rainures (7, 9) pour loger, supporter et guider des fils diamantés adjacents en boucle fermée ; **caractérisé en ce que** le rouleau ou tambour est divisé en au moins deux sections (2, 3, 4, 32 ou 42) du rouleau ou tambour constituant au moins deux parties du rouleau ou tambour, afin de supporter et de guider un certain nombre de fils diamantés adjacents égal ou supérieur à deux par partie de rouleau ou de tambour ; de manière correspondante, et **en ce que** chaque section a sa partie respective de rouleau ou de tambour équipée avec des organes de support et de rotation pour chaque partie qui sont indépendants et raccordés en rotation à un axe de support ou pivot du rouleau ou du tambour.

2. Rouleau ou tambour selon la revendication 1, dans lequel l'axe de support ou pivot est divisé en parties d'axe de support ou pivot d'une largeur correspondant à la largeur des parties du rouleau desdites sections (2, 3, 4 ou 32) ; les organes de support rotatifs sur la partie correspondante de l'axe de support ou pivot permettent à la section du rouleau ou du tambour d'être séparée ou assemblée aux sections adjacentes au moyen des parties de raccordement/assemblage de l'axe de support ou pivot rassemblées.

3. Rouleau ou tambour selon la revendication 2, dans lequel les parties de l'axe ou pivot des sections adjacentes sont équipées avec des organes de centrage réciproques et des raccordements rigides entre elles afin d'aligner les surfaces cylindriques externes respectives des parties correspondantes qui s'y rapportent du rouleau ou tambour, afin de créer une surface cylindrique externe alignée des rainures de logement (7, 9) pour les fils diamantés.

4. Rouleau ou tambour selon la revendication 1, dans lequel la distance entre les rainures (9) des deux extrémités des sections (2, 3, 4 ou 32) adjacentes dans deux parties du rouleau ou tambour côte à côte, pour le logement des fils diamantés adjacents, est égale à la distance (D) nécessaire pour découper une plaque de pierre de l'épaisseur minimum prévue pour la machine multifils.

5. Rouleau ou tambour selon la revendication 1, dans lequel la largeur et le nombre de rainures de logement (7, 9) pour les fils diamantés sont les mêmes dans toutes les sections (2, 3, 4 ou 32) du rouleau ou tambour selon lesquelles il est divisé.

6. Rouleau ou tambour selon la revendication 3, dans lequel les parties de pivot de support (10) ou axe des sections du rouleau ou du tambour sont tubulaires.

7. Rouleau ou tambour selon la revendication 6, dans lequel, à l'intérieur de la partie tubulaire du pivot (10), on trouve des trous débouchants (14) pour loger les vis (13) qui raccordent rigidement la partie du pivot à une partie du pivot ou avec le support (5) derrière elle ; on trouve, en plus, des trous borgnes filetés (15) qui sont en quinconce par rapport aux trous débouchants.

8. Rouleau ou tambour selon la revendication 1, dans lequel la distance entre deux rainures (7) adjacentes, les deux n'étant pas à l'extrémité de la partie du rouleau ou tambour d'une section, est égale à 1/3 de la distance (D) entre les rainures aux extrémités des deux parties du rouleau ou du tambour appartenant aux sections adjacentes.

9. Rouleau ou tambour selon la revendication 1, dans lequel les organes de support et de rotation comprennent une paire de paliers de roulement (22) pour chaque partie du rouleau ou du tambour pouvant rouler sur sa partie correspondante de pivot (10) ou de tube de support (34), les paliers de roulement sont logés dans des espaces (23) à proximité des extrémités de leur partie respective de rouleau ou de tambour ou de pivot ou de tube.

10. Rouleau ou tambour selon la revendication 9, dans lequel les paliers de roulement (22) sont logés dans un espace lubrifié avec une pression extérieure et ont des instruments d'assemblage dans l'espace avec un joint d'étanchéité annulaire (24) vers l'extérieur de l'espace.

11. Rouleau ou tambour selon la revendication 1, dans lequel les parties de rouleau ou de tambour entre deux sections adjacentes sont équipées avec des espaces cylindriques, pour la protection, mâle (29) et femelle (28), sur les extrémités opposées de chaque partie, pour la pénétration réciproque suite au couplage entre les sections qui sont côte à côte et raccordées entre elles.

12. Rouleau ou tambour selon la revendication 1, dans lequel chaque corps modulaire rotatif (41) de chaque partie/section (42) du rouleau composite (40) peut être démonté par rapport à son propre moyeu (46).

13. Rouleau ou tambour selon la revendication 12, dans lequel le démontage du moyeu (46) et du corps modulaire rotatif (41) relatif de la partie/section (42) a lieu au moyen du démontage d'une bride de couplage équipée d'oreilles (44, 45) raccordées par des ouvertures (51) et des rainures (48) dans la bride opposée.
